**Europäisches Patentamt**

**European Patent Office**

**Office européen des brevets**

(19)

(11) Veröffentlichungsnummer: **0 505 670 A2**

# (12) EUROPÄISCHE PATENTANMELDUNG

(21) Anmeldenummer: **92100098.0**

(22) Anmeldetag: **07.01.92**

(51) Int. Cl.5: **H04M 3/30**

(30) Priorität: **27.03.91 DE 4110046**

(43) Veröffentlichungstag der Anmeldung:
**30.09.92 Patentblatt 92/40**

(84) Benannte Vertragsstaaten:
**AT BE CH DE FR GB IT LI LU NL**

(71) Anmelder: **BOSCH TELECOM ÖFFENTLICHE VERMITTLUNGSTECHNIK GmbH**
**Kölner Strasse 5**
**W-6236 Eschborn(DE)**

(72) Erfinder: **Volk, Thomas, Dipl.-Ing.**
**Kaiserstrasse 32**
**W-6305 Buseck 1(DE)**
Erfinder: **Schreiber, Manfred, Dipl.-Ing.**
**Nordstrasse 6**
**W-6466 Gründau 1(DE)**
Erfinder: **Trick, Ulrich, Dr.**
**Rother Weingartenweg 50**
**W-6232 Bad Soden(DE)**

(54) **Verfahren zum Prüfen einer Übertragungsstrecke.**

(57) Zur Mehrfachausnutzung einer gemeinsamen zweiadrigen physikalischen Leitung sind mehrer Übertragungsstrekken mit Nutz- und Signalisierungskanälen vorhanden. Am einen Ende sind vermittlungsstellenseitige Schnittstelleneinrichtungen (SV) und am anderen Ende teilnehmerseitige Schnittstelleneinrichtungen (SA) vorhanden. Jede Schnittstelleneinrichtung weist eine eigene Steuereinrichtung (ST1) bzw. (ST2) auf, welche untereinander über einen Signalisierungskanal Meldungen austauschen.

Zur Prüfung einer derartigen Einrichtung wird vermittlungsstellenseitig ein besonderes Signal angelegt, durch welches die gesamte Übertragungsstrecke in den Prüfzustand gebracht wird. Durch unterschiedliche Signale, die vermittlungsstellenseitig angelegt werden, lassen sich verschiedene Prüf- und Überwachungsvorgänge auslösen, deren Ergebnis durch entsprechende Signale zum vermittlungsstellenseitig angeschlossenen Prüfgerät übermittelt werden. Neben der Prüfung der einzelnen Einrichtungen auf Funktionsfähigkeit ist auch eine Durchgangsprüfung mit Tonsignalen möglich.

EP 0 505 670 A2

Die Erfindung betrifft ein Verfahren zum Prüfen einer Übertragungsstrecke, welche an einem Ende eine oder mehrere zwei- oder vieradrige, analoge Schnittstellen zum Anschluß an eine oder mehrere Teilnehmeranschlußschaltungen einer Fernsprechvermittlungsanlage (Vermittlungsstellenseite) und am anderen Ende entsprechend eine oder mehrere zwei- oder vieradrige, analoge Schnittstellen zum Anschluß jeweils eines Fernsprechapparates (Teilnehmerseite) aufweist, bei welcher anschlußindividuelle Schnittstelleneinrichtungen vorgesehen sind, welche jeweils eine Zweidraht/Vierdraht-Gabel, einen Analog/Digital-Wandler und einen Digital/Analog-Wandler, eine Übertragungseinrichtung zum Anschluß einer gemeinsamen Übertragungsleitung und einer Steuereinrichtung aufweisen und die Übertragungsleitung anschlußindividuelle Nutzkanäle und evtl. einen oder mehrere Signalisierungskanäle aufweist.

Eine derartige Übertragungsstrecke wird beispielsweise zur besseren Ausnutzung eines vorhandenen Kabelnetzes von Teilnehmeranschlußleitungen verwendet, da es die Verwendung einer einzigen Teilnehmeranschlußleitung, welche aus einem Adernpaar besteht, zum Anschluß von zwei oder auch mehr Fernsprechapparaten an einer Fernsprechvermittlungsanlage ermöglicht, wobei gleichzeitig mehrere Gesprächsverbindungen über die gemeinmeinsame Leitung abgewickelt werden können. Die Übertragungsstrecke besteht aus vermittlungsseitigen und teilnehmerseitigen Schnittstelleneinrichtungen, zwischen denen die gemeinsame Leitung angeordnet ist. Dabei ist die vermittlungsseitige Schnittstelle derart aufgebaut, daß diese sich zur Fernsprech-Vermittlungsanlage hin wie ein Fernsprechapparat verhält. Ebenso ist die teilnehmerseitige Schnittstelleneinrichtung so ausgestattet, daß an diese ein Fernsprechapparat anschließbar ist. Eine derartige Übertragungsstrecke ist beispielsweise in der Druckschrift "Bosch Telecom Öffentliche Vermittlungstechnik GmbH, Fachberichte zur Cebit'90" auf den Seiten 40 und 41 beschrieben.

Zur Nachbildung des Verhaltens eines Fernsprechapparates bzw. einer Teilnehmeranschlußschaltung müssen die betreffenden Schnittstelleneinrichtungen neben den übertragungstechnischen Funktionen weitere Funktionen erfüllen. So muß z. B. die vermittlungsseitige Schnittstelleneinrichtung den Rufstrom erkennen, Gebührenimpulse empfangen und das Schließen der Schleife nachbilden, während die teilnehmerseitige Schnittstelleneinrichtung den Rufstrom zum Fernsprechapparat aussenden, Gebührenimpulse erzeugen, das Schließen der Schleife erkennen und die eintreffenden Wahlimpulse empfangen muß.

Die Aufgabe der Erfindung besteht nun darin, ein Verfahren anzugeben, welches eine möglichst weitgehende Prüfung sämtlicher genannter Einrichtungen ermöglicht, wobei durch die Prüfvorgänge eine Störung des angeschlossenen Fernsprechapparates vermieden werden soll.

Diese Aufgabe wird dadurch gelöst, daß vermittlungsstellenseitig ein besonderes Signal zur Kennzeichnung des Prüfzustandes angelegt wird, welches von eine Erkennungseinrichtung der vermittlungsseitigen Schnittstelleneinrichtung empfangen und an die Steuereinrichtung derselben gemeldet wird, daß diese daraufhin über einen Nutz- oder Signalisierungskanal eine entsprechende Meldung an die teilnehmerseitige Schnittstelleneinrichtung sendet, die der dortigen Steuereinrichtung mitgeteilt wird, worauf sich beide Schnittstelleneinrichtungen im Prüfzustand befinden.

Durch diese Maßnahme wird sichergestellt, daß die Steuereinrichtungen zwischen Betriebszustand und Prüfzustand unterscheiden können, sodaß bei der Durchführung von Prüfvorgängen Störungen des Fernsprechapparates vermieden werden können. Hierunter fällt beispielsweise die Überprüfung der Erzeugung von Rufstromsignalen oder die Erzeugung von Gebührenimpulsen, welche am Fernsprechapparat jedoch nicht registriert werden sollen.

Eine Weiterbildung der Erfindung besteht darin, daß im Prüfzustand durch vermittlungsstellenseitiges Anlegen unterschiedlicher Signale unterschiedliche Prüfvorgänge in der vermittlungsstellenseitigen und/oder in der teilnehmerseitigen Schnittstelleneinrichtung auslösbar sind, wobei unterschiedliche Prüfergebnisse durch unterschiedliche Signale gekennzeichnet werden, welche von der vermittlungsstellenseitigen Schnittstelle in Richtung Fernsprech-Vermittlungsanlage gesendet werden.

Eine vorteilhafte Weiterbildung der Erfindung besteht auch darin, daß die Signale in der vermittlungsstellenseitigen Schnittstelleneinrichtung erkannt und der betreffenden Steuereinrichtung mitgeteilt werden, daß diese entsprechende Meldungen für die Steuereinrichtung der teilnehmerseitigen Schnittstelleneinrichtung erzeugt, welche über einen Nutz- oder einer Signalisierungskanal übertragen werden.

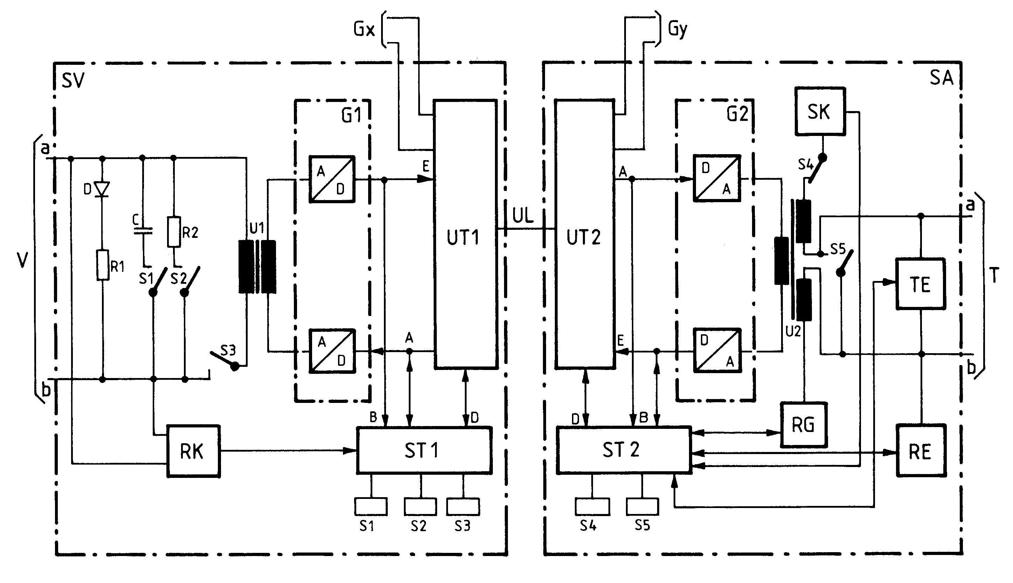

Die Erfindung wird anhand eines Ausführungsbeispiels näher erläutert, welches in der Zeichnung dargestellt ist.

Bei dem in der Zeichnung dargestellten Blockschaltbild sind nur diejenigen Einrichtungen gezeigt, die zum Verständnis der Erfindung unbedingt notwendig sind. Bei dem Ausführungsbeispiel wird davon ausgegangen, daß die analogen Anschlußleitungen zur Fernsprech-Vermittlungsanlage V bzw. zum Fernsprechapparat T zweiadrig ausgeführt sind. Es ist jedoch auch ohne weiteres denkbar, diese als vieradrige Anschlußleitungen auszuführen. Weiterhin zeigt das Ausführungsbeispiel die Anschlußmöglichkeit einer weiteren Teilnehmeranschlußschaltung bzw. eines weiteren Fernsprechapparates, wobei die Übertragung der Informationen für beide Anschlüsse gleichzeitig über die Übertragungsleitung UL erfolgt. Die Steuereinrichtung ST1 und ST2 sind gemeinsam, ebenso wie die Übertragungsteile UT1 und UT2, während sämtliche übrigen Einrichtungen entsprechend doppelt vorhanden sind.

Die vermittlungsstellenseitige Schnittstelle SV ist über die Sprechadern a und b mit einer Fernsprechvermittlungsanlage V und zwar mit einer individuellen nicht gezeigten Teilnehmeranschlußschaltung verbunden. An der teilnehmerseitigen Schnittstelleneinrichtung SA ist an den Sprechadern a und b der Fernsprechapparat T angeschlossen, dabei verhält sich die vermittlungsstellenseitige Schnittstelleneinrichtung SV zur Fernsprechvermittlungsanlage V wie ein Fernsprechapparat, während die teilnehmerseitige Schnittstelleneinrichtung SA sämtliche Funktionen einer Teilnehmeranschlußschaltung für den Fernsprechapparat T nachbildet.

Zwischen die Sprechadern a/b sind vermittlungsstellenseitig eine Diode D und ein Widerstand R in Reihe geschaltet, außerdem ist ein Kondensator C über ein Schaltmittel S1 und ein Widerstand R2 über ein Schaltmittel S2 an die Sprechadern a/b anschaltbar. Durch ein Schaltmittel S3 kann die Schleife zwischen den Sprechadern a/b geschlossen werden. Weiterhin ist an den Sprechadern a/b ein Rufstrom- und ein Polaritätserkenner RK angeschlossen. Diese können getrennte Einrichtungen oder auch als eine gemeinsame Einrichtung ausgebildet sein. Ein Übertrager U1 dient zur galvanischen Trennung zwischen den Sprechadern a/b und der Gabelschaltung G1, sie ist als Zweidraht/Vierdraht-Gabel ausgebildet und sie dient zur richtungsabhängigen Behandlung der Sprachsignale, die in Vorwärtsrichtung einem Analog/Digital-Wandler A/D zugeführt werden bzw. von einem Digital/Analog-Wandler D/A erzeugt werden. Der digitale Anschluß der genannten Wandler ist mit einem Übertragungsteil UT1 verbunden, an welchem weitere nicht gezeigte Gabelschaltungen G angeschlossen sein können.

Der Rufstrom- und Polaritäts-Erkenner RK ist mit der Steuereinrichtung ST1 der vermittlungsseitigen Schnittstelleneinrichtung SV verbunden. Die Schaltmittel S1, S2 und S3 werden von der Steuereinrichtung ST1 gesteuert, diese hat auch Zugriff zum Übertragungsteil UT1 und zwar zum D-Kanal und evtl. zum B-Kanal.

Der übertragungstechnische Teil der teilnehmerseitigen Schnittstelleneinrichtung SA entspricht dem Aufbau der vermittlungsseitigen Schnittstelleneinrichtung SV. Die beiden Sprechadern a/b der zum Fernsprechapparat T führenden nicht gezeigten Teilnehmeranschlußleitung sind an einem Übertrager U2 zur galvanischen Trennung und zur Speisung angeschlossen, welcher mit einer Zweidraht/Vierdraht-Gabel G2 verbunden ist. Diese weist wiederum für jede Richtung einen Analog/Digital A/D bzw. Digital/Analog-Wandler D/A auf, welche mit ihrem Digitalanschluß jeweils mit dem Übertragungsteil UT2 verbunden sind. Die Steuereinrichtung ST2 der teilnehmerseitigen Schnittstelleneinrichtung SA ist ebenfalls mit Schaltmitteln verbunden, sie hat außerdem einen Zugriff zum Übertragungsteil UT2, an welchem weitere Gabelschaltungen Gy angeschlossen sein können.

Die beiden Übertragungsteile UT1 und UT2 sind mit einer Übertragungsleitung UL verbunden, welche in der Regel aus einem zweiadrigen Kupferkabel besteht. Dieses kann je nach Kabeldurchmesser eine maximale Länge zwischen 4 und 8 km haben. Über die Übertragungsleitung U werden gleichzeitig in beiden Richtungen für sämtliche an der Übertragungsstrecke angeschlossene Teilnehmer die Sprach- und die Signalisierungsinformationen übertragen. Dies kann beispielsweise dadurch geschehen, daß Zwei B-Kanäle (Nutzkanäle) mit jeweils 64 kbit/s und ein D-Kanal (Signalisierungskanal) mit 16 kbit/s übertragen werden, wobei bei einem Anschluß von zwei Teilnehmern der eine B-Kanal dem einen Teilnehmer und der andere B-Kanal dem anderen Teilnehmer zur Verfügung steht, während der D-Kanal je zur Hälfte für beide Teilnehmeranschlüsse verwendet wird.

Zum besseren Verständnis der Funktionen der einzelnen Einrichtungen wird zunächst einmal ein ankommender und ein abgehender Verbindungsaufbau beschrieben, bevor auf die eigentlichen Prüfvorgänge näher eingegangen wird.

Sobald von der Fernsprechvermittlungsanlage V Rufstrom an die Sprechadern a/b angelegt wird, wird dies vom Rufstrom- und Polaritätserkenner RK erkannt und der Steuereinrichtung ST1 gemeldet, diese sendet daraufhin eine entsprechende Meldung an den Übertragungsteil UT1, welche diese über den betreffenden Teil des D-Kanals über die Übertragungsleitung UL zum Übertragungsteil UT2 der teilnehmerseitigen Schnittstelleneinrichtung SA überträgt, von dort gelangt die Meldung zur Steuereinrichtung ST2. Diese veranlaßt den Rufgenerator RG zum Aussenden des Rufstroms auf die Sprechadern a/b zum Fernsprechapparat T. Die Aussendung des Rufstroms wird vom Rufstromerkenner RE überwacht und das einwandfreie Arbeiten des Rufstromgenerators RG an die Steuereinrichtung ST2 gemeldet. Sobald eine Störung auftritt, erfolgt die Übermittlung einer entsprechenden Meldung von der Steuereinrichtung ST2 über den bereits beschriebenen Weg zur Steuereinrichtung ST1, welche eine entsprechende Alarmsignalisierung veranlaßt (beispielsweise Einschalten einer Leuchtdiode, Anschalten eines Kondensators C an die Sprechadern durch das Schaltmittel S2).

Sobald der Teilnehmer am Fernsprechapparat T den Handapparat abnimmt, wird dies vom Schleifenerkenner SK erkannt und an die Steuereinrichtung ST2 gemeldet, welche die Abschaltung des Rufstromgenerators RG und die Übermittlung einer entsprechenden Meldung an die Steuereinrichtung ST1 über den D-Kanal veranlaßt. Die Steuereinrichtung ST1 veranlaßt daraufhin das Schliessen des Schaltmittels S3, wodurch das Abnehmen des Handapparates nachgebildet wird. Das Schließen der Schleife wird in der Teilnehmerschaltung der Fernsprechvermittlungsanlage V erkannt, der Rufstrom abgeschaltet und die Verbindung in den Gesprächszustand gebracht.

Die in der vermittlungsseitigen Schnittstelleneinrichtung SV eintreffenden analogen Sprachsignale werden vom Analog/Digital-Wandler A/D in digitale Informationen (beispielsweise PCM-Worte) umgewandelt und über den dafür vorgesehenen B-Kanal zur teilnehmerseitigen Schnittstelleneinrichtung SA über den Übertragungsteil UT1, die Übertragungsleitung UL und den Übertragungsteil UT2 übermittelt. Vom dortigen Digital/Analog-Wandler D/A werden die Digitalsignale wieder in analoge Sprachsignale umgewandelt und über die Sprechadern a/b zum Fernsprechapparat T gesendet. Die Übermittlung der Sprachsignale in umgekehrter Richtung erfolgt in gleicher Weise, wobei für die umgekehrte Richtung eigene Wandler A/D und D/A vorhanden sind.

Die von der Fernsprechvermittlungsanlage V eintreffenden Gebührenimpulse werden von einem nicht gezeigten Gebührenimpulsempfänger in der vermittlungsseitigen Schnittstelleneinrichtung SV empfangen und der Steuereinrichtung ST1 gemeldet, welche wiederum über den D-Kanal eine entsprechende Meldung an die Steuereinrichtung ST2 sendet, welche die Aussendung der Gebührenimpulse durch eine nicht gezeigte Sendeeinrichtung in der teilnehmerseitigen Schnittstelleneinrichtung SA zum Fernsprechapparat T über die Sprechadern a/b veranlaßt.

Sobald der Teilnehmer einhängt, wird das Öffnen der Schleife vom Schleifenerkenner SK festgestellt und an die Steuereinrichtung ST2 gemeldet. Diese sendet eine entsprechende Meldung über den D-Kanal an die Steuereinrichtung ST1, welche ihrerseits das Öffnen des Schaltmittels S3 veranlaßt. Damit wird die Schleife geöffnet und die Verbindung ausgelöst. Die Übertragungsstrecke befindet sich jetzt wieder in der Ruhelage.

Eine abgehende Verbindung wird vom Schleifenerkenner SK festgestellt und der Steuereinrichtung ST2 gemeldet. Diese sendet eine entsprechende Meldung an die Steuereinrichtung ST1, welche ihrerseits das Schließen des Schaltmittels S3 veranlaßt. Dies hat die Einleitung eines Verbindungsaufbaus in der Fernsprechvermittlungsanlage V zur Folge. Die Übertragung des Wähltons von der Fernsprechvermittlungsanlage V zum Fernsprechapparat T erfolgt auf gleiche Weise wie die bereits beschriebene Übertragung der Sprachsignale. Durch die Aussendung der Wahlinformation wird die Schleife der Sprechadern a/b im Rhythmus der Wahlimpulse unterbrochen, diese Unterbrechungen werden vom Schleifenerkenner SK der Steuereinrichtung ST2 übermittelt, die Impulse in Form jeweils eines Datenwortes über den D-Kanal der Steuereinrichtung ST1 der vermittlungsseitigen Schnittstelleneinrichtung SV mitteilt. Diese veranlaßt daraufhin die rhythmische Unterbrechung der Schleife zwischen den Sprechadern a/b zur Fernsprechvermittlungsanlage V durch das Schaltmittel S3, um auf diese Weise die Wahlinformation aus dem jeweiligen Datenwort zu erzeugen. Besetztzeichen oder Freizeichen werden von der Fernsprechvermittlungsanlage V zum Fernsprechapparat T über den bereits beschriebenen Weg zur Übertragung von Sprachsignalen übertragen. Die Auslösung der Verbindung erfolgt wieder in der bereits beschriebenen Weise.

Die Prüfung der Übertragungsstrecke erfolgt durch eine Prüfeinrichtung, beispielsweise durch den Prüftisch 59 der Deutschen Bundespost (siehe Unterrichtsblätter der Deutschen Bundespost Ausgabe B, Jg. 20 (1967) Nr. 12, Jg. 21 (1968) Nr. 1 und 4, Jg. 38 (1985) Nr. 3). Bei dem Prüftisch handelt es sich um ein manuelles Prüfgerät, wobei die Prüfvorgänge durch eine Bedienungspersonabgewickelt werden. Es ist jedoch ein halb- oder vollautomatisches Prüfgerät denkbar. Die Prüfeinrichtung wird vermittlungsstellenseitig an die Sprechadern a/b angeschlossen, dabei wird die Verbindung zur Teilnehmeranschlußschaltung teilweise oder vollständig abgetrennt.

Zunächst wird von der Prüfeinrichtung die Speisespannung an den Sprechadern a/b umgepolt, so daß jetzt die positive Spannung an der Sprechader a anliegt. Damit wird die Diode D durchlässig, so daß es möglich ist, den Widerstand R1 von der Prüfeinrichtung zu messen. Auf diese Weise läßt sich feststellen, ob eine vermittlungsstellenseitige Schnittstelleneinrichtung SV an den betreffenden Sprechadern a/b angeschlossen ist. Das Umpolen der Speisespannung wird auch durch die Ruf- und Polaritätserkenner RK festgestellt und an die Steuereinrichtung ST1 der vermittlungsstellenseitigen Schnittstelleneinrichtung SV gemeldet. Diese erzeugt daraufhin eine Meldung, welche über den D-Kanal zur teilnehmerseitigen Schnittstelleneinrichtung SA übermittelt und dort von der Steuereinrichtung ST2 ausgewertet wird. Durch ein entsprechendes Quittungssignal kann der Steuereinrichtung ST1 der einwandfreie Empfang der Meldung mitgeteilt werden. Die Übertragungsstrecke befindet sich nun im Prüfzustand, d. h. daß sämtliche ablaufende Vorgänge im Rahmen der Prüfung nicht wie bei einem Verbindungsaufbau oder -abbau behandelt werden. Wie bereits erwähnt, wird bei einem Alarmfall, beispielsweise bei Ausfall des Rufgenerators RG in der teilnehmerseitigen Schnittstelleneinrichtung SA der Alarmzustand von der Steuereinrichtung ST2 durch eine entsprechende Meldung über den D-Kanal die Steuereinrichtung ST1 der vermittlungsstellenseitigen Schnittstelleneinrichtung SV entsprechend informiert, welche daraufhin das Schaltmittel S1 betätigt, welches zwischen die Sprechadern a/b vermittlungsstellenseitig einen Kondensator C dauernd anschaltet.

Durch eine entsprechende Kapazitätsmessung in der Prüfeinrichtung läßt sich feststellen, ob der Kondensator C zwischen die beiden Sprechadern a/b geschaltet ist oder nicht. Ist der Kondensator nicht eingeschaltet, liegt kein Alarmfall vor, bei Vorliegen desselben kann dies durch das Prüfgerät festgestellt werden. Der Alarmfall hat jedoch keinen Einfluß auf den Fortgang der Prüfung.

Als nächstes wird von der Prüfeinrichtung an die Sprechadern a/b ein Rufsignal angelegt, welches von dem Ruf- und Polaritätserkenner RK festgestellt und an die Steuereinrichtung ST1 der vermittlungsstellenseitigen Schnittstelleneinrichtung SV gemeldet wird, diese veranlaßt die Öffnung des Schaltmittels S1, wenn ein Alarmfall vorgelegen hat. Außerdem wird von der Steuereinrichtung ST1 über den D-Kanal eine Meldung zur Steuereinrichtung ST2 gesendet, welche die Prüfeinrichtung TE aktiviert, außerdem wird durch die Steuereinrichtung ST2 die Öffnung des Schaltmittels S4 veranlaßt, welches die Speisespannung von den Sprechadern a/b zum Fernsprechapparat T abtrennt. Die Prüfeinrichtung TE legt eine Meßspannung mit umgekehrter Polaritäten die Sprechadern a/b an und mißt einen Strom vorgegebener Höhe, welcher durch eine in der Anschlußdose des Fernsprechapparates T an den Sprechadern a/b angeschlossenen Reihenschaltung einer Diode und eines Widerstandes bestimmt wird. Diese Anordnung entspricht derjenigen Reihenschaltung der Diode D und des Widerstandes R1 an den Sprechadern a/b der vermittlungsstellenseitigen Schnittstelleneinrichtung SV. Mit dieser Messung wird die Teilnehmeranschlußleitung von der teilnehmerseitigen Schnittstelleneinrichtung SA bis zur Anschlußdose des Fernsprechapparats T und das Vorhandensein der nicht gezeigten Anschlußdose überprüft. Weist der gemessene Widerstand den vorgegebenen Wert auf, so gelangt ein entsprechendes Signal von der Prüfeinrichtung TE an die Steuereinrichtung ST2, welche anschließend eine entsprechende Meldung über den D-Kanal an die Steuereinrichtung ST1 der vermittlungsstellenseitigen Schnittstelleneinrichtung SV übermittelt wird. Diese veranlaßt daraufhin das Schließen des Schaltmittels S2, welches einen Widerstand R2 an die Sprechadern a/b anschaltet und auf diese Weise das Meßergebnis zur Prüfeinrichtung vermittlungsstellenseitig signalisiert. Die Anschaltung des Widerstandes R2 kann auf einfache Weise durch eine Widerstandsmessung festgestellt werden.

Die Aussendung der Meldung von der Steuereinrichtung ST1 zur Steuereinrichtung ST2, welche die beschriebene Prüfung veranlaßt hat, wird in der Steuereinrichtung ST1 der vermittlungsstellenseitigen Schnittstelleneinrichtung SV zeitlich überwacht, d. h. es muß innerhalb einer vorgegebenen Zeit eine Rückmeldung von der teilnehmerseitigen Schnittstelleneinrichtung SA hinsichtlich des Prüfergebnisses in der Steuereinrichtung ST1 eintreffen. Kommt eine Meldung mit einem negativen Prüfergebnis von der teilnehmerseitigen Schnittstelleneinrichtung SA zurück, so unterbleibt die Schließung des Schaltmittels S2, kommt dagegen überhaupt keine Meldung zurück, dann liegt entweder eine Störung in den Übertragungsteilen UT1 oder UT2 oder auch in der Übertragungsleitung UL oder in der teilnehmerseitigen Schnittstelleneinrichtung SA selbst vor. In diesem Fall veranlaßt die Steuereinrichtung ST1 das Schließen des Schaltmittels S1, welches den Kondensator C an die Sprechadern a/b anschaltet, um auf diese Weise den Alarmzustand zu signalisieren.

In beiden Steuereinrichtungen ST1 und ST2 wurde das Eintreffen des Rufsignals registriert, so daß nach Eintreffen eines weiteren Rufsignals bzw. eines Tonsignals weitere Vorgänge gesteuert werden können. Die Steuereinrichtung ST1 der vermittlungsstellenseitigen Schnittstelleneinrichtung SV sendet eine Meldung über den D-Kanal zur Steuereinrichtung ST2 der teilnehmerseitigen Schnittstelleneinrichtung SA, worauf deren Steuereinrichtung ST2 das Öffnen des Schaltmittels S4 veranlaßt.

Durch das geöffnete Schaltmittel S4 wird der Gegenpol des Rufstromgenerators RG abgetrennt, so daß kein Rufstrom über die Anschlußleitung zum Fernsprechapparat T fließen kann. Der Rufstromgenerator RG sendet auf Veranlassung der Steuereinrichtung ST2 anschließend ein Rufsignal, welches von der Ruferkennungseinrichtung RE aufgenommen und an die Steuereinrichtung ST2 signalisiert wird. Nach erfolgter Signalisierung beendet die Steuereinrichtung ST2 das Aussenden des Rufsignals und veranlaßt das Schließen des Schaltmittels S4 und des Schaltmittels S5, welches das Ansprechen des Schleifenerkenners SK zur Folge hat. Dies wird von der Steuereinrichtung ST2 erkannt und registriert.

Arbeitet auch der Rufstromgenerator RG und die Rufstromerkennungseinrichtung RE einwandfrei, dann sendet die Steuereinrichtung ST2 eine entsprechende Meldung über den D-Kanal zur Steuereinrichtung ST1 der vermittlungsstellenseitigen Schnittstelleneinrichtung SV, welche daraufhin das Schließen des Schaltmittels S3 veranlaßt, durch diese Maßnahme wird der Belegtzustand zur Prüfeinrichtung signalisiert. Erhält die Steuereinrichtung ST1 innerhalb einer vorgegebenen Zeit keine Meldung von der Steuereinrichtung ST2 der teilnehmerseitigen Schnittstelleneinrichtung SA so veranlaßt sie das Schließen des Schaltmittels S2, welches den Widerstand R2 an die Sprechadern a/b anschaltet. Dieser Widerstand kann durch das Prüfgerät gemessen werden und signalisiert in dieser Prüfphase den Ausfall der betreffenden Einrichtungen in der teilnehmerseitigen Schnittstelleneinrichtung SA.

Als nächster Schritt im Verlauf der Prüfung wird vom Prüfgerät beispielsweise in Intervallen ein Tonsignal angelegt, welches in der vermittlungsstellenseitigen Schnittstelleneinrichtung SV eintrifft und über die Gabelschaltung G1 dem Analog/Digital-Wandler A/D zugeführt wird. Es gelangt wie ein Sprachsignal über den Übertragungsteil UT1 und die Übertragungsleitung UL zum Übertragungsteil UT2 und von dort zum Digital/Analog-Wandler der Gabelschaltung G2. Durch das weiterhin geschlossene Schaltmittel S5 ist das Gleichgewicht der Gabel infolge Kurzschlusses der zum Fernsprechapparat T führenden Anschlußleitung gestört, so daß das Ausgangssignal des Digital/Analog-Wandlers D/A wieder dem Eingang des Analog/Digital-Wandler A/D zugeführt wird. Von hier gelangt es wiederum über den Übertragungsteil UT2, die Übertragungsleitung UL und den Übertragungsteil UT1 zum Digital/Analog-Wandler der Gabelschaltung G1 der vermittlungsstellenseitigen Schnittstelleneinrichtung SV. Das Analogsignal gelangt über die Sprechadern a/b dann zum Prüfgerät, wo der Empfang desselben möglich ist. Auf diese Weise läßt sich der Übertragungsweg für die Sprachsignale einwandfrei überprüfen. Für die Überprüfung der einzelnen Übertragungsabschnitte werden jedoch zusätzlich die Steuereinrichtungen ST1 und ST2 herangezogen, welche zu diesem Zweck mit den digitalen Aus- bzw. Eingängen der Analog/Digital-Wandler A/D bzw. Digital/Analog-Wandler D/A der beiden Gabelschaltungen G1 und G2 verbunden sind. Beide Steuereinrichtungen ST1 und ST2 sind somit in der Lage, die Digitalsignale des Tonsignals von der Vermittlungsstellenseite zur Teilnehmerseite zu überwachen. Außerdem wird das digitalisierte Tonsignal in der umgekehrten Richtung in der vermittlungsstellenseitigen Schnittstelleneinrichtung SV durch die Steuereinrichtung ST1 überwacht.

Trifft das digitale Tonsignal am Ausgang des Übertragungsteils UT2 in der teilnehmerseitigen Schnittstelleneinrichtung SA ein, dann kann die Steuereinrichtung ST2 eine entsprechende Meldung über den D-Kanal zur Steuereinrichtung ST1 senden. Erscheint das digitale Tonsignal zuerst am Eingang E und auch dann am Ausgang A des Übertragungsteils UT1 der vermittlungsstellenseitigen Schnittstelleneinrichtung SV, dann speist die Steuereinrichtung ST1 ihrerseits nach Ende des Tonsignals ein Tonsignal gleicher oder abweichender Frequenz oder auch als Folge von Tönen unterschiedlicher Dauer ein, welches über den Digital/Analog-Wandler D/A der Gabelschaltung G1 auf die Sprechadern a/b zum Prüfgerät gelangt. Die Aussendung des Tonsignals vom Prüfgerät kann nun entweder manuell oder auch selbsttätig beispielsweise in Intervallen erfolgen, so daß während der Pausen die beschriebene Einspeisung des Tonsignals in der vermittlungsstellenseitigen Schnittstelleneinrichtung SV erfolgen kann. Durch diese Maßnahme kann vom Prüfgerät erkannt werden, ob nicht nur die Übertragungsstrecke einwandfrei arbeitet, sondern auch bei Defekten festgestellt werden kann, ob der Defekt in der vermittlungsstellenseitigen Schnittstelleneinrichtung SV oder in der teilnehmerseitigen Schnittstelleneinrichtung SA zu suchen ist.

Empfängt die Steuereinrichtung ST1 das in Richtung teilnehmerseitige Schnittstelleneinrichtung SA gesendete Tonsignal und wird kein Tonsignal aus der Richtung der teilnehmerseitigen Schnittstelleneinrichtung SA von der Steuereinrichtung ST1 empfangen, so wird ein unterschiedliches Tonsignal in der vermittlungsstellenseitigen Schnittstelleneinrichtung SV eingespeist. Damit ist erkennbar, daß der Defekt in der teilnehmerseitigen Schnittstelleneinrichtung SA liegen muß. Kommt dagegen überhaupt kein Tonsignal zum Prüfgerät zurück, so kann daraus geschlossen werden, daß die vermittlungsstellenseitige Schnittstelleneinrichtung SV hinsichtliche des Übertragungsweges defekt ist.

Während dieser Prüfphase ist auch eine Einspeisung von Gebührenimpulsen (beispielsweise 16 khz) vermittlungsseitig möglich. Diese werden von einer nicht gezeigten Empfangseinrichtung aufgenommen und der Steuereinrichtung ST1 gemeldet, die daraufhin eine entsprechende Meldung für jeden Gebührenimpuls zur Steuereinrichtung ST2 der teilnehmerseitigen Schnittstelleneinrichtung SA sendet. Diese veranlaßt die Aussendung von Gebührenimpulsen durch einen nicht gezeigten Gebührenimpulsgenerator, welche von einem nicht gezeigten Gebührenimpulsempfänger der teilnehmerseitigen Schnittstelleneinrichtung SA empfangen werden. Die beiden Einrichtungen sind ähnlich wie der Rufstrom generator RG und die Rufstromerkennungseinrichtung RE an der b-Ader angeschlossen, so daß bei geöffnetem Schaltmittel S4 keine Gebührenimpulse zum Fernsprechapparat T gelangen können.

Durch Abschaltung der umgepolten Speisespannung an den Sprechadern a/b oder durch Anlegen der normalen Speisespannung auf der Vermittlungsstellenseite der Schnittstelleneinrichtung SV wird der Prüfzustand aufgehoben, dies wird von dem Ruf- und Polaritätserkenner RK festgestellt und an die Steuereinrichtung ST1 signalisiert, welche ihrerseits eine entsprechende Meldung über den D-Kanal zur Steuereinrichtung ST2 sendet. Die Übertragungsstrecke befindet sich damit wieder im Betriebszustand. Durch den Anschluß der Steuereinrichtung ST1 bzw. ST2 am Eingang des Digital/Analog-Wandlers der Gabelschaltung G1 bzw. G2 der Schnittstelleneinrichtung SV bzw. SA besteht die Möglichkeit, durch die Steuereinrichtungen Tonsignale unterschiedlicher Frequenz einzuspeisen, welche zur Signalisierung von Prüfergebnissen dienen und vom Prüfgerät ausgewertet werden können. Das erfindungsgemäße Prüfverfahren ist auch bei solchen Übertragungsstrecken für analoge Anschlüsse anwendbar, wenn neben diesen auch digitale Anschlüsse an der Übertragungsstrecke vorhanden sind.

Die Einleitung der Prüfung kann nicht durch Umpolen der Speisespannung bzw. durch Kreuzen der Sprechadern eingeleitet werden, dies ist auch durch ein besonderes Ruf- oder Tonsignal denkbar.

**Patentansprüche**

1. Verfahren zum Prüfen einer Übertragungsstrekke, welche an einem Ende eine oder mehrere zwei- oder vieradrige, analoge Schnittstellen zum Anschluß an eine oder mehrere Teilnehmeranschlußschaltungen einer Fernsprechvermittlungsanlage (Vermittlungsstellenseite) und am anderen Ende entsprechend eine oder mehrere zwei- oder vieradrige, analoge Schnittstellen zum Anschluß jeweils eines Fernsprechapparates (Teilnehmerseite) aufweist, bei welcher anschlußindividuelle Schnittstelleneinrichtungen vorgesehen sind, welche jeweils eine Zweidraht/Vierdraht-Gabel, einen Analog/Digital-Wandler und einen Digital/Analog-Wandler, eine Übertragungseinrichtung zum Anschluß einer gemeinsamen Übertragungsleitung und eine Steuereinrichtung aufweisen und die Übertragungsleitung anschlußindividuelle Nutzkanäle und evtl. einen oder mehrere Signalisierungskanäle aufweist,
**dadurch gekennzeichnet,**
**daß** vermittlungsstellenseitig ein besonderes Signal zur Kennzeichnung des Prüfzustands angelegt wird, welches von einer Erkennungseinrichtung (RK) der vermittlungsseitigen Schnittstelleneinrichtung (SV) empfangen und an die Steuereinrichtung (ST1) derselben gemeldet wird, daß diese daraufhin über einen Nutz- oder Signalisierungskanal eine entsprechende Meldung an die teilnehmerseitige Schnittstelleneinrichtung (SA) sendet, die der dortigen Steuereinrichtung (ST2) mitgeteilt wird, worauf sich beide Schnittstelleneinrichtungen (SV, SA) im Prüfzustand befinden.

2. Verfahren nach Anspruch 1,
**dadurch gekennzeichnet,**
**daß** das besondere Signal durch Umpolung der Speisespannung gebildet wird.

3. Verfahren nach Anspruch 1,
**dadurch gekennzeichnet,**
**daß** das besondere Signal durch ein unterschiedliches Ruf- oder Tonsignal gebildet wird.

4. Verfahren nach Anspruch 1,
**dadurch gekennzeichnet,**
**daß** im Prüfzustand durch vermittlungsstellenseitiges Anlegen unterschiedlicher Signale unterschiedliche Prüfvorgänge in der vermittlungsstellenseitigen (SV) und in der teilnehmerseitigen Schnittstelleneinrichtung (SA) auslösbar sind, wobei die Prüfergebnisse durch unterschiedliche Signale gekennzeichnet werden, welche von der vermittlungsseitigen Schnittstelleneinrichtung (SV) in Richtung Fernsprechvermittlungsanlage (V) gesendet werden.

5. Verfahren nach Anspruch 4,
**dadurch gekennzeichnet,**
**daß** die Signale in der vermittlungsstellenseitigen Schnittstelleneinrichtung (SV) erkannt und der betreffenden Steuereinrichtung (ST1) mitgeteilt werden, daß diese entsprechende Meldungen für die Steuereinrichtung (ST2) der teilnehmerseitigen Schnittstelleneinrichtung (SA) erzeugt, welche über einen Nutz- oder Signalisierungskanal übertragen werden.

6. Verfahren nach Anspruch 4,
**dadurch gekennzeichnet,**
**daß** die Prüfergebnisse von der Steuereinrichtung (ST2) der teilnehmerseitigen Schnittstelleneinrichtung (SA) ausgewertet und entsprechende Meldungen über einen Nutz- oder Signalisierungskanal zur Steuereinrichtung (ST1) der vermittlungsseitigen Schnittstelleneinrichtung (SV) übermittelt werden, welche die Signalisierung der Prüfergebnisse in Richtung Fernsprechvermittlungsanlage (V) veranlaßt.

7. Verfahren nach einem der Ansprüche 1 bis 6,
**dadurch gekennzeichnet,**

daß vermittlungsstellenseitig zwischen zwei Adern (a/b) eine Reihenschaltung eines hochohmigen Widerstandes (R1) und einer Diode (D) geschaltet ist.

8. Verfahren nach einem der Ansprüche 1 bis 6,
**dadurch gekennzeichnet,**
daß in der Anschlußdose eines Fernsprechapparates (T) zwischen zwei Adern (a/b) eine Reihenschaltung eines hochohmigen Widerstandes und einer Diode geschaltet ist und daß in der teilnehmerseitigen Schnittstelleneinrichtung (SA) teilnehmerseitig zwischen zwei Adern (a/b) eine mit der Steuereinrichtung (ST2) verbundene Prüfeinrichtung (TE) geschaltet ist, welche eine umgepolte Spannung an die Sprechadern (a/b) anlegt.

9. Verfahren nach einem der Ansprüche 1 bis 8,
**dadurch gekennzeichnet,**
daß durch ein vermittlungsstellenseitig angelegtes Signal (beispielsweise Rufstrom) die teilnehmerseitige Schnittstelleneinrichtung (SA) veranlaßt wird, ein Rufsignal auszusenden, welches von einer Ruferkennungseinrichtung (RE) ausgewertet wird, wobei das Ergebnis der betreffenden Steuereinrichtung (ST2) mitgeteilt wird.

10. Verfahren nach einem Ansprüche 1 bis 9,
**dadurch gekennzeichnet,**
daß im durchgeschalteten Zustand der Übertragungsstrecke vermittlungsstellenseitig ein Tonsignal vorgegebener Dauer oder in Intervallen eingespeist wird, welches von der Steuereinrichtung (ST1) der vermittlungsstellenseitigen Schnittstelleneinrichtung (SV) ausgewertet und zusätzlich zur teilnehmerseitigen Schnittstelleneinrichtung (SA) durchgeschaltet und dort geschleift wird, und daß bei einwandfreiem Empfang desselben durch die Steuereinrichtung (ST1) der vermittlungsstellenseitigen Schnittstelleneinrichtung (SV) nach Ende des vermittlungsstellenseitig eingespeisten Tonsignals oder in der Pause ein erstes Tonsignal in Richtung zur Fernsprechvermittlungsanlage (V) eingespeist wird.

11. Verfahren nach einem der Ansprüche 1 bis 9,
**dadurch gekennzeichnet,**
daß im durchgeschalteten Zustand der Übertragungsstrecke vermittlungsstellenseitig ein Tonsignal vorgegebener Dauer oder in Intervallen eingespeist wird, welches von der Steuereinrichtung (ST1) der vermittlungsstellenseitigen Schnittstelleneinrichtung (SV) ausgewertet und zusätzlich zur teilnehmerseitigen Schnittstelleneinrichtung (SA) durchgeschaltet und von dort geschleift wird, und daß bei Ausbleiben des Tonsignals dem Ausgang (A) des Überwachungsteils (UT1) der vermittlungsstellenseitigen Schnittstelleneinrichtung (SV) durch die Steuereinrichtung (ST1) ein zweites Tonsignal nach Ende oder in der Pause des vermittlungsstellenseitig eingespeisten Tonsignals in Richtung zur Fernsprechvermittlungsanlage (V) eingespeist wird.

12. Verfahren nach einem der Ansprüche 1 bis 11,
**dadurch gekennzeichnet,**
daß die teilnehmerseitige Schnittstelleneinrichtung (SA) eine Erkennungseinrichtung für Gebührenimpulse aufweist, welche durch die betreffende Steuereinrichtung (ST2) aktivierbar ist und bei kurzgeschlossener Teilnehmeranschlußleitung Gebührenimpulse empfängt, die durch eine Sendeeinrichtung für Gebührenimpulse in der teilnehmerseitigen Schnittstelleneinrichtung (SA) in Abhängigkeit von vermittlungsstellenseitig eingespeisten Gebührenimpulsen ausgesendet werden.

13. Verfahren nach einem der Ansprüche 1 bis 12,
**dadurch gekennzeichnet,**
daß durch vermittlungsseitiges Anlegen eines ersten Rufsignals ein erster Prüfvorgang und durch ein Tonsignal bzw. durch erneutes Anlegen eines Rufsignals ein weiterer Prüfvorgang auslösbar ist.

14. Verfahren nach Anspruch 13,
**dadurch gekennzeichnet,**
daß durch das erste Rufsignal der teilnehmerseitigen Schnittstelleneinrichtung (SA) die Abtrennung der Speisespannung von den Sprechadern (a/b) und das Anlegen einer umgepolten Meßspannung an die Sprechadern (a/b) veranlaßt wird und daß die Messung eines vorgegebenen Widerstandswertes zur Steuereinrichtung (ST1) der vermittlungsstellenseitigen Schnittstelleneinrichtung (SV) gemeldet wird, die ihrerseits die Anschaltung eines Widerstandes (R2) an die Sprechadern (a/b) in Richtung Fernsprechvermittlungsanlage veranlaßt.

15. Verfahren nach Anspruch 13,
**dadurch gekennzeichnet,**
daß durch das weitere Rufsignal, welches ebenso wie das erste Rufsignal in der Steuereinrichtung (ST1) der vermittlungsstellenseitigen Schnittstelleneinrichtung (SV) registriert wird, in der teilnehmerseitigen Schnittstelleneinrichtung (SA) die Steuereinrichtung (ST2) veranlaßt wird, den Schleifenerkenner (SK) durch Öffnen des Schaltmittels (S4) abzutrennen und anschließend den Rufstromgenerator (RG) zum Aussenden eines Rufsignals zu veranlassen, daß bei Ansprechen des Rufstromerkenners (RE) die Steuereinrichtung (ST2) der teilnehmerseitigen Schnittstelleneinrichtung (SA) das Schließen eines die Sprechadern (a/b) kurzschliessenden Schaltmittels (S5) veranlaßt, daß daraufhin ein Schleifenerkenner (SK) ein Signal an die Steuereinrichtung (ST2) der teilnehmerseitigen Schnittstelleneinrichtung (SA) sendet, daß bei Vorhandensein dieses Signals die Steuereinrichtung (ST2) eine entsprechende Meldung an die Steuereinrichtung (ST1) der vermittlungsstellenseitigen Schnittstelleneinrichtung (SV) sendet, welche daraufhin das Schließen eines in der Schleife der Sprechadern (a/b) liegenden Schaltmittels (S3) veranlaßt.

16. Verfahren nach einem der Ansprüche 1 bis 15,
**dadurch gekennzeichnet,**
**daß** vermittlungsstellenseitig ein Prüfgerät oder ein Prüftisch angeschlossen ist.

17. Verfahren nach Anspruch 1,
**dadurch gekennzeichnet,**
**daß** durch ein entsprechendes, vermittlungsstellenseitig angelegtes Signal der Prüfzustand der Übertragungsstrecke aufhebbar ist.

18. Verfahren nach Anspruch 1,
**dadurch gekennzeichnet,**
**daß** die Dauersignalisierung eines Alarmzustandes durch die vermittlungsstellenseitige Schnittstelleneinrichtung (SV), der außerhalb des Prüfzustandes aufgetreten ist, mit dem Beginn des Prüfzustandes aufgehoben wird.

19. Verfahren nach einem der Anprüche 1 bis 18,
**dadurch gekennzeichnet,**
**daß** die Signalisierung des Alarmzustandes während des Prüfzustandes verhindert ist.

20. Verfahren nach einem der Ansprüche 1 bis 19,
**dadurch gekennzeichnet,**
**daß** die Signalisierung des Alarmzustandes während des Prüfzustandes möglich ist.

21. Verfahren nach einem der Ansprüche 17 bis 20,
**dadurch gekennzeichnet,**
**daß** ein Prüfergebnis durch die Steuereinrichtung (ST1) der vermittlungsstellenseitigen Schnittstelleneinrichtung (SV) durch Schließen eines Schaltmittels (S2) zur Anschaltung eines Kondensators (C) an die Sprechadern (a/b) gekennzeichnet wird.